# EUROPEAN PATENT APPLICATION

(11) **EP 4 144 637 A1**
(43) Date of publication of application: **08.03.2023**
(21) Application number: 22193972.1
(22) Date of filing: 05.09.2022
(51) Int. Cl.: B64C 11/00, B64C 29/00

(54) **AIRCRAFT PROVIDED WITH SUPPORTING WINGS FOR THE CRUISE FLIGHT**

(30) Priority: 06.09.2021 IT 202100023033
(71) Applicant: Becchi, Paolo, 17027 Pietra Ligure (SV) (IT); Greensky S.r.l., 16121 Genova (GE) (IT)
(72) Inventor: Becchi, Paolo, 17027 Pietra Ligure (SV) (IT)
(74) Representative: Bottino, Giovanni

(57) **Abstract**

Aircraft (3) provided with carrier wings (30) for cruise flight, comprising a cycloidal propulsion unit (2) and at least one intubated propeller (1). The intubated propeller (1) comprises a propeller (10) placed rotatable about a main rotation axis (21) and a conduit (11) coaxial to the propeller (10) and placed around the same, the cycloidal propulsion unit (2) being placed on an end edge of the conduit (11) of the intubated propeller (1).

## Description

The present invention relates to an aircraft with carrier wings for cruise flight comprising a cycloidal propulsion unit.

The invention is applicable to any type of aircraft and is particularly advantageously applied in vertical take-off and landing (VTOL) aircraft. This specific technical field will be referred to directly, but not in a limited way, in the following description.

In recent years, many vertical take-off and landing aircraft have been studied and developed to allow for the advancement of mobility in large metropolises and in areas without airports and other communication means.

In some cases the same engines are used both during take-off and for conventional flight where the weight of the aircraft is supported by the wing lift and the required thrust is significantly reduced.

In a type of aircraft called tiltrotor, the same propellers are used for both take-off and vertical flight and for cruise flight, by means of propeller axis tilting means. Depending on the type of such tilting means, tiltrotors are divided into three categories: a first category envisages the rotation of the entire aircraft and is therefore identified with the term "tailsitter"; a second category envisages the rotation of the engine unit only; a third category envisages the rotation of the aerodynamic surface to which the engine is connected.

In addition, aircraft exist with one or more fixed propellers specifically oriented for vertical flight and one or more fixed propellers specifically oriented for horizontal flight. These two types of propellers are separate and are housed on the same aircraft. For example, US 2019/0135425 A1 describes a VTOL aeroplane with propellers positioned on the wing nacelles, wing arms and tail arm, some of which are oriented for vertical flight and others oriented for cruise flight.

In this type of VTOL aircraft, however, the resistance exerted by the propellers for cruise flight during vertical flight and, vice versa, the resistance exerted by the propellers for vertical flight during cruise flight, significantly worsen flight efficiency.

There is therefore a need not satisfied by the state of the art for a propulsion unit which optimizes vertical flight and cruise flight, minimizing the resistance to air offered by the propellers.

A known aeronautical propulsion unit in the state of the art is the cycloidal propulsion unit, or cyclogiro. Such a propulsion unit comprises a series of blades rotated about a main axis according to a circular path, each blade being adjustable along its own rotation axis substantially parallel to the main axis, so as to vary the attachment angle of each individual blade to generate a global thrust in an adjustable direction.

The use of the cyclogiro in flying machines has been proposed, but never actually implemented, in aircraft called cyclocopters. Cyclocopters fly by virtue of a rotating wing with horizontal axis capable of carrying out sustained and controlled flight, both autonomous and piloted, both in vertical flight/hovering, and in vertical take-off and landing, and cruise flight. To date, there have never been any successful cyclocopters, although the theoretical functionality of this aircraft has been independently verified numerous times by aerospace researchers over the past century. Design attempts have been made since the end of the 1800s, with significant research carried out in the 1930s and 1940s. Research on the subject was mostly abandoned after World War II, while the helicopter became dominant as VTOL aircraft technology.

The cyclogiro takes its name from the cycloidal path which its blades trace with respect to the air during forward flight. This movement is not unlike that of winged insects and birds. The lifting and propulsion forces of the cyclogiro are generated very similarly to the controls of the wing and elevator on a traditional, fully-articulated helicopter rotor, in which the cyclic control inputs individually vary the attachment angle of the rotor blades as they rotate with respect to the helicopter. For the cyclogiro, the oscillating blades are oriented in a bladed wheel arrangement and maintain a tangential angle to their path when there is no control input. When the control input is provided, the blade angles oscillate with respect to their path with a pitch amplitude, phase angle, and pitch offset dependent on the control mechanism. The resulting net thrust is highly dependent on the design of the control mechanism, but in all cases it can be varied by 360° in the plane perpendicular to the main rotation axis.

At all times, on a diameter orthogonal to the propulsion direction, the blades are tangent to the circle passing through the centre of rotation of the blades, a circle which also represents the path taken by the blades. On the diameter extending in the direction of the propulsive force developed by the cycloidal propulsion unit, those blades placed on the front side of the cycloidal propulsion unit have the front ends inclined outwards with respect to said circle, while at the other end of the diameter, i.e., at the rear side of the cycloidal propulsion unit, the blades have the front ends inclined inwards in said circle.

In the cyclocopter designs which have been proposed over time, the carrier wings are replaced by cycloidal propulsion units with a horizontal axis, which allow both horizontal flight and vertical flight.

The propulsive structure must have enormous proportions in this configuration, and the relative orientation mechanism of the blades greatly increases the overall weight and the manufacturing complexity. For this reason, truly operational cyclocopters have never been made.

An example of such a cyclocopter is described by US 5,100,080 A. This document discloses an aircraft with a cycloidal engine comprising several blades profiled with axes parallel to the drive axis, in which the incidence of each blade is controlled in real time as a function of its angular azimuth and the flight conditions, to obtain the desired lift and propulsion forces.

Furthermore, CN 102556335 A discloses an aircraft configured with a flying wing and provided with cycloidal propellers. The cycloidal propeller engines are arranged above the wing and symmetrically with respect to the antero-posterior median axis of the aircraft and have blades arranged along the vertical axis. However, such engines can provide thrust only horizontally.

The present invention aims to overcome the aforesaid disadvantages of the state of the art, with an aircraft with carrier wings for cruise flight as described in the introduction, comprising at least one intubated propeller, which intubated propeller includes a propeller rotatable about a main rotation axis and a conduit coaxial to the propeller and placed around the same, the cycloidal propulsion unit being placed on an end edge of the conduit of the intubated propeller.

In an exemplary embodiment the cycloidal propulsion unit comprises an annular rotor rotatable about said main rotation axis and a plurality of blades mounted on the rotor and extending in a direction substantially parallel to the main rotation axis, each blade being mounted rotatable about its own rotation axis and oscillating drive means of each blade about its own axis being included.

In a preferred exemplary embodiment, the main rotation axis is vertical or substantially vertical.

Thereby, the cycloidal propulsion unit is solely responsible for translated flight while the lift necessary for cruise flight is ensured by the carrier wings. This allows to size the cycloidal propulsion unit with reduced dimensions and weights, suitable for aeronautical use.

In a further exemplary embodiment, the rotor is rotationally driven by an electric motor.

In an embodiment, the oscillating drive means of each blade around its own axis comprise electric servomotors.

The presence of servomotors for controlling the incidence of the blade profiles during rotation allows each blade to be controlled independently. This makes it possible to optimize the aerodynamic characteristics and possibly also to control the attitude of the aircraft.

According to a preferred embodiment, the aircraft is of the vertical take-off type.

In an exemplary embodiment, the intubated propeller is driven by an electric motor.

In a further exemplary embodiment, at least the end of said conduit near the cycloidal propulsion unit is provided with closing means.

According to an exemplary embodiment, the closing means comprise a plurality of rigid, wedge-shaped, radially-arranged closing elements. Each closing element can be oriented about its own axis placed radially with respect to the main rotation axis such that the closing element can be moved from a conduit opening condition, in which the closing element lies substantially in a plane parallel to the main rotation axis, to a conduit closing condition, in which the closing element lies substantially in a plane transverse to the main rotation axis and in contact with two adjacent closing elements.

According to an embodiment, said wings are each provided with one or more through openings for housing one said intubated propeller and one said cycloidal propulsion unit.

The object of the present invention is further an aeronautical propulsion unit comprising an intubated propeller and a cycloidal propulsion unit, in which the intubated propeller comprises a propeller rotatable about a main rotation axis and a conduit coaxial to the propeller and placed around the same, and the cycloidal propulsion unit is placed on an end edge of the conduit of the intubated propeller.

According to an exemplary embodiment the cycloidal propulsion unit comprises an annular rotor rotatable about a main rotation axis and a plurality of blades mounted on the rotor and extending in a direction substantially parallel to the main rotation axis, each blade being mounted rotatable about its own rotation axis and oscillating drive means of each blade about its own axis being included.

According to a further exemplary embodiment, the rotor is driven in rotation by an electric motor, which electric motor comprises a stator integral with the edge of said conduit and a rotor integral with the blade support rotor.

According to an exemplary embodiment, the oscillating drive means of each blade about its own axis comprise electric servomotors.

The aeronautical propulsion unit object of the present invention can also include only a cycloidal propulsion unit provided with electric servomotors for the oscillating drive of each blade about its own axis.

In an embodiment, the intubated propeller is driven by an electric motor.

In a further embodiment at least the end of said conduit near the cycloidal propulsion unit is provided with closing means.

According to an exemplary embodiment, the closing means comprise a plurality of rigid, flat, wedge-shaped, radially-arranged closing elements, each closing element being orientable about its own axis placed radially with respect to the main rotation axis, such that the closing element can be moved from a conduit opening condition, in which the closing element lies substantially in a plane parallel to the main rotation axis, to a conduit closing condition, in which the closing element lies substantially in a plane transverse to the main rotation axis and in contact with two adjacent closing elements.

An object of the present invention is further a vertical take-off aircraft with carrier wings for cruise flight, which aircraft is provided with at least one aeronautical propulsion unit having one or more of the characteristics described above.

In an embodiment, said wings are each provided with one or more through openings for housing an aeronautical propulsion unit having one or more of the characteristics described above.

Preferably, the housing of the aeronautical propulsion units is configured to obtain a main rotation axis arranged vertically.

Thereby, the air is pushed by the intubated propeller vertically from the upper surface to the lower surface of the wings, generating a vertical thrust necessary for support.

The aeronautical propulsion unit according to the present invention is suitable for replacing the vertical and horizontal propeller engines with a single unit which, depending on the flight conditions, is capable of producing a vertical thrust for take-off and landing and a horizontal thrust for translated flight.

This propulsion system is suitable for multiple applications in conventional VTOL aircraft and is particularly suitable for low-speed aircraft. The propulsive performance, if suitably optimized, can be higher and the noise generated can be less intense with respect to conventional aeronautical propellers.

These and other characteristics and advantages of the present invention will become clearer from the following disclosure of several embodiments illustrated, by way of example only, in the attached drawings, in which:
fig. 1 shows a sectional view of an example embodiment of the aeronautical propulsion unit;
fig. 2 shows the aeronautical propulsion unit with the closing means in a closed condition;
figs. 3 and 4 show two views of the aeronautical propulsion unit with the closing means in the open condition;
fig. 5 shows an embodiment of a vertical take-off aircraft provided with two propulsion units;
fig. 6 shows a wing provided with a propulsion unit.

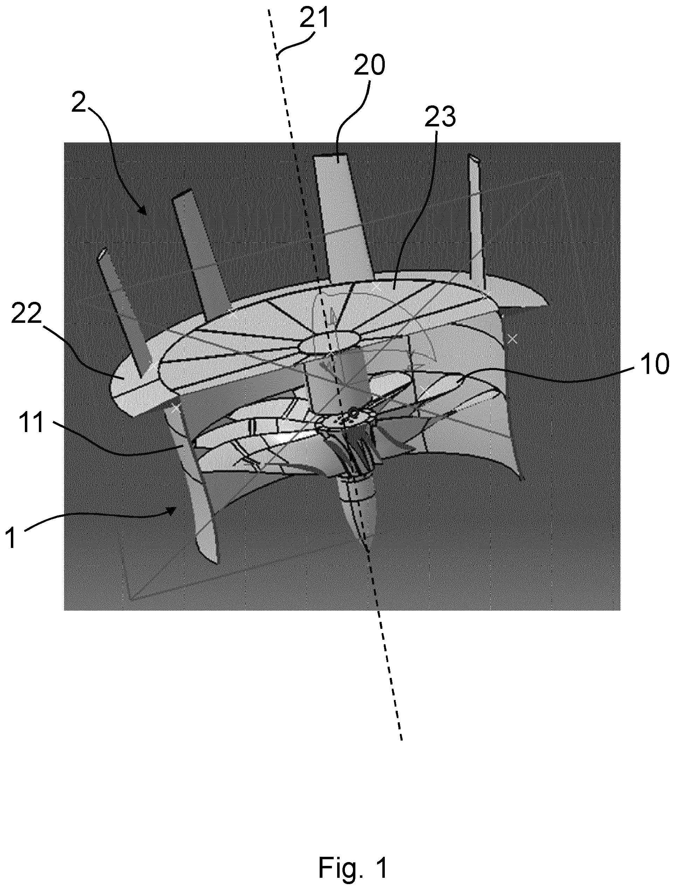

The aeronautical propulsion unit shown in figures 1 to 4 comprises an intubated propeller 1 and a cycloidal propulsion unit 2.

The intubated propeller comprises a propeller 10 placed rotatable about a main rotation axis and a conduit 11 coaxial to the propeller 10 and placed around the same. The conduit 11 consists of a rigid hollow cylindrical element. The propeller 10 is preferably driven in rotation by an electric motor.

The cycloidal propulsion unit 2 is placed on an end edge of the conduit 11 of the intubated propeller 1 and comprises an annular rotor 22 which is rigid and rotatable about the main rotation axis 21. It is possible to include two cycloidal propulsion units 2 on the opposite end edges of the conduit 11, arranged specularly to each other. The two cycloidal propulsion units 2 can be counter-rotating. It is also possible to include two rotors 22 counter-rotating with each other for each cycloidal propulsion unit 2.

A plurality of blades 20 is mounted on the rotor 22, extending in a direction substantially parallel to the main rotation axis 21. Each blade 20 is mounted rotatable about its own rotation axis substantially parallel to the main rotation axis 21.

The rotor 22 is driven in rotation by an electric motor. Other motor systems can also be used.

Preferably, the electric motor comprises a stator integral with the edge of said conduit 11 and a rotor fixed integral with the rotor 22 supporting the blades 20.

Oscillating drive means of each blade 20 are included around its own axis, which can consist of, for example, a mechanical guide or a chain of gears or other solely mechanical systems such as in the cycloidal propulsion units known in the state of the art, or preferably by electric servomotors.

Each blade 20 is therefore connected to and oriented by a respective electric servomotor 22. Preferably, at least one electrical power source of each servomotor 22 and at least one control unit of each servomotor 22 are included, connected thereto by means of electrical connections of a type known in the state of the art.

The oscillating drive means of each blade 20 are configured so that, at each instant, on a diameter orthogonal to the propulsion direction, the blades 20 are tangential to the circle having the main rotation axis 21 as its centre, a circle which also represents the path taken by the blades 20. On the diameter extending in the direction of the propulsive force developed by the propulsion unit 2, those blades 20 placed on the front side of the propulsion unit 2 have the front ends inclined outwards with respect to said circle, while at the other end of the diameter, i.e., at the rear side of the propulsion unit 2, the blades 20 have the front ends inclined inwards in said circle.

This allows the cycloidal propulsion unit 2 to exert a global thrust in the desired direction.

The end of the conduit 11 near the cycloidal propulsion unit is provided with closing means. It is possible to include closing means also of the further end of the conduit 11.

In the example of the figures, the closing means comprise a plurality of rigid closing elements 23 which are flat or substantially flat and wedge-shaped and radially arranged to complete the opening of the conduit 11, forming a closing disc with a diameter corresponding to the inner diameter of the conduit.

Each closing element 23 is rotatable by suitable drive means known to the person skilled in the art about its own radial axis placed with respect to the main rotation axis 21. Thereby, the closing element 23 can be moved from an opening condition of the conduit 11 to a closing condition of the conduit 11.

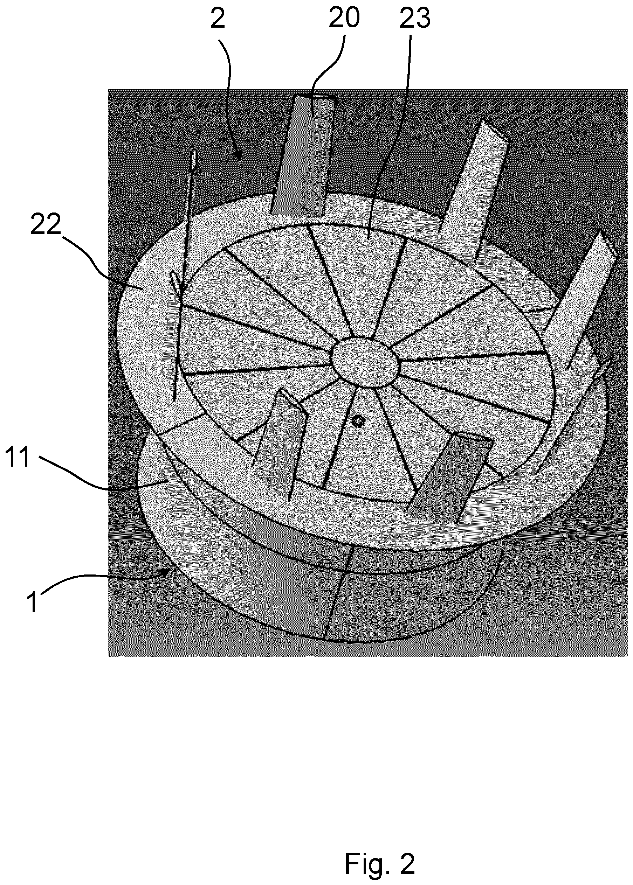

Figures 1 and 2 show the closing elements 23 arranged in the closing condition of the conduit 11, i.e., arranged so as to lie on a plane perpendicular to the main rotation axis 21, each closing element 23 being in contact with two adjacent closing elements 23. Said closing disc is thereby formed which completely occludes the conduit 11 and forms a continuous surface for minimizing the resistance to air in consideration of the thrust action exerted by the cycloidal propulsion unit 2.

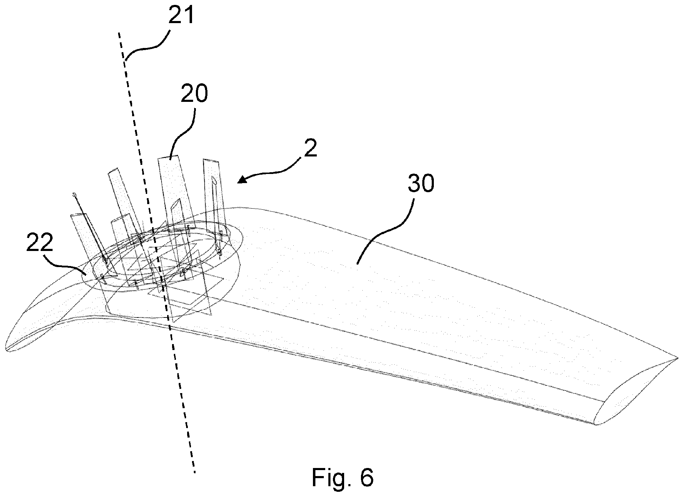

It is possible to include a closing disc with a slightly cap-like shape, as described in greater detail below for figure 6. In this case the closing elements 23 are not perfectly flat as in figures 1 to 4, but curved and each of them in the closing condition lies substantially on a plane not perfectly perpendicular but in any case transverse to the main rotation axis.

The closing condition shown in figures 1 and 2 is then used in the active phase of the cycloidal propulsion unit 2, with the intubated propeller 1 being stationary.

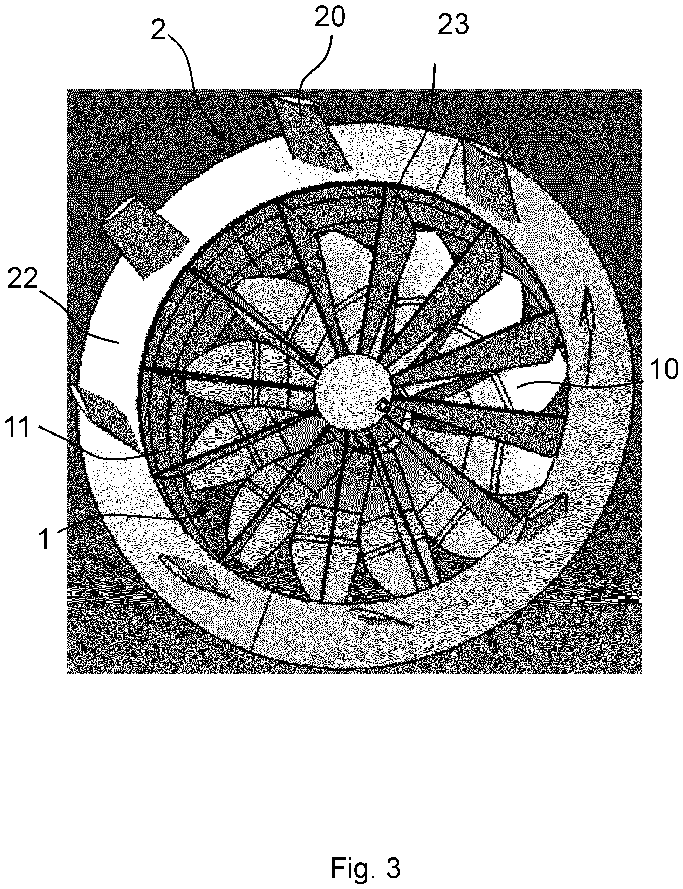

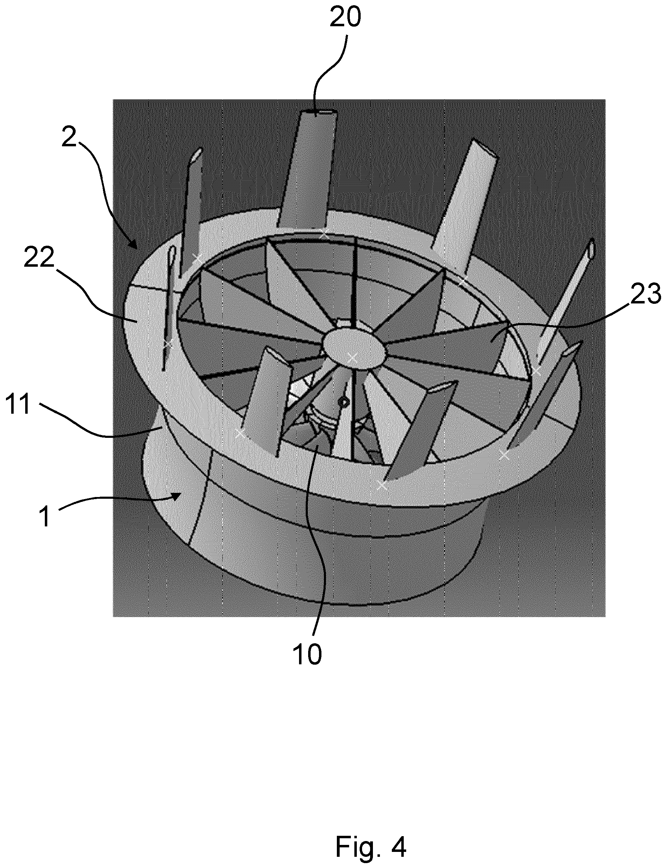

Figures 3 and 4 show the closing elements 23 arranged in the opening condition of the conduit 11, i.e., arranged so as to lie on planes parallel to the main rotation axis 21.

In this condition, the closing elements 23 are arranged parallel to the air flow generated by the intubated propeller 1, not offering resistance to the propulsion action thereof.

This condition is therefore used during the active phase of the intubated propeller 1. In this active phase, the cycloidal propulsion unit 2 can be stopped and the arrangement of the blades 20 in the direction parallel to the main rotation axis 21 allows to minimize the resistance offered by the same to the flow generated by the intubated propeller 1. Preferably, the cycloidal propulsion unit 2 is activated in this opening condition of the conduit 11, and the oscillating drive means of the blades 20 are configured to arrange the blades 20 in a condition such that the blades 20, rotating, convey the air towards the conduit 11, increasing the thrust generated by the intubated propeller 1.

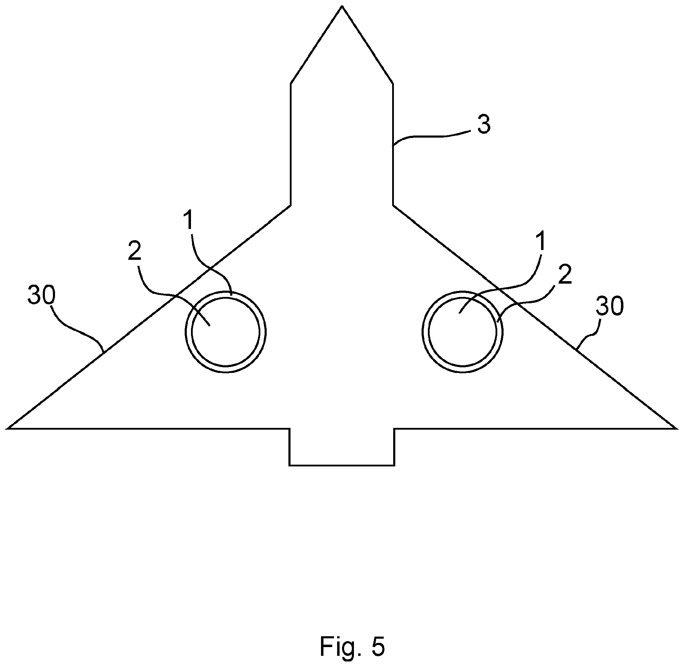

Figure 5 shows a view of an embodiment of a vertical take-off aircraft 3 according to the present.

The aircraft 3 is provided with carrier wings 30 for cruise flight and is provided with at least one aeronautical propulsion unit as described above.

In the case in the figure, two aeronautical propulsion units are included on the wings 30, each comprising an intubated propeller 1 and a cycloidal propulsion unit 2.

Preferably, the wings 30 are each provided with a through opening for housing a respective aeronautical propulsion unit, positioned with the main rotation axis 21 arranged vertically.

Thereby, the intubated propeller 1 can direct the air flow vertically towards the ground and generate the necessary support for take-off and landing. In this phase, the blades 20 of the cycloidal propulsion unit 2, rotating, convey the air inwards in the conduit 11, increasing the thrust exerted by the intubated propeller 1.

In a next step, the blades 20 begin to generate a horizontal thrust, accelerating the aircraft 3. When the speed necessary for support is reached through the carrying surfaces, i.e., the wings 30, the intubated propeller 10 stops and the conduit 11 is closed by the closing means.

At this point, the rotor 22, or rotors, of the cycloidal propulsion unit 2 continue to rotate, generating the thrust necessary for horizontal flight.

To perform a vertical landing, the reverse process is followed, in which the conduit 11 is opened and the intubated propeller 1 generates the thrust necessary for the safe support of the aircraft on the ground.

Figure 6 shows a wing 30 configured like a gull wing and provided with the aeronautical propulsion unit. The aeronautical propulsion unit can consist only of the cycloidal propulsion unit 2 or, in the case of a VTOL aircraft, of the cycloidal propulsion unit 2 and the intubated propeller.

The rotation axis of each blade 20 is substantially parallel to the main rotation axis 21, or, as shown in figure 6, slightly diverging therefrom. Preferably, in fact, the blades 20 are arranged along normal surface axes of the aircraft at their point of contact. Since the wing 30 has a convex upper surface, the gull wing configuration shown in the figure proves particularly advantageous for the definition of an area in which the surface is substantially dome-shaped, i.e., symmetrical with respect to the main rotation axis 21. In this case, the axes of the blades 20 are slightly divergent upwards with respect to the main rotation axis 21, in order to be along the normal surface of the wing 30 in each position.

In this case, moreover, the closing means can be completely similar to what is shown in figures 1 to 4, but the closing elements 23, instead of being flat, are slightly curved to follow the curvature of the surface of the wing 30.

Alternatively, it is possible to include only one or more cycloidal propulsion units 2, preferably mounted on the upper surface of an aircraft, not necessarily vertical take-off, but provided with carrier wings 30. In this case the cycloidal propulsion units 2 are preferably positioned on the wings 30, but can be arranged alternatively or in combination on the nacelle or in other positions. Rotating, such cycloidal propulsion units 2 produce the thrust necessary for translational flight and, preferably used at low speed, can have very high yields and reduced noise with respect to conventional propellers.

## Claims

1. Aircraft (3) provided with carrier wings (30) for cruise flight comprising a cycloidal propulsion unit (2),
**characterized in that**
it comprises at least one intubated propeller (1), which intubated propeller (1) comprises a propeller (10) placed rotatable about a main rotation axis (21) and a conduit (11) coaxial to the propeller (10) and placed around the same, the cycloidal propulsion unit (2) being placed on an end edge of the conduit (11) of the intubated propeller (1).

2. Aircraft according to claim 1, wherein the cycloidal propulsion unit (2) comprises an annular rotor (22) rotatable about a main rotation axis (21) and a plurality of blades (20) mounted on the rotor (22) and extending in a direction substantially parallel to said main rotation axis (21), each blade (20) being mounted rotatable about its own rotation axis and oscillating drive means of each blade (20) around its own axis being included.

3. Aircraft according to claim 1 or 2, wherein the main rotation axis (21) is vertical or substantially vertical.

4. Aircraft according to claims 2 or 3, wherein the rotor (22) is driven in rotation by an electric motor.

5. Aircraft according to one or more of claims 2 to 4, wherein the oscillating drive means of each blade (20) about its own axis comprise electric servomotors.

6. Aircraft according to one or more of the preceding claims, wherein the intubated propeller (10) is driven by an electric motor.

7. Aircraft according to one or more of the preceding claims, wherein at least the end of said conduit (11) near the cycloidal propulsion unit (2) is provided with closing means.

8. Aircraft according to claim 7, wherein the closing means comprise a plurality of rigid, wedge-shaped, radially-arranged closing elements (23), each closing element (23) being orientable about its own axis placed radially with respect to the main rotation axis (21) such that the closing element (23) can be moved from a conduit opening condition (11), in which the closing element (23) lies substantially in a plane parallel to the main rotation axis (21), to a conduit closing condition (11), in which the closing element (23) lies substantially in a plane transverse to the main rotation axis (21) and in contact with two adjacent closing elements (23).

9. Aircraft according to one or more of the preceding claims, wherein said wings (30) are each provided with one or more through openings for housing one said intubated propeller (1) and one said cycloidal propulsion unit (2).

10. Aeronautical propulsion unit comprising a cycloidal propulsion unit (2),
**characterized in that**
it comprises an intubated propeller (1), which intubated propeller (1) comprises a propeller (10) placed rotatable about a main rotation axis (21) and a conduit (11) coaxial to the propeller (10) and placed around the same, and said cycloidal propulsion unit is placed on an end edge of the conduit of the intubated propeller.

11. Aeronautical propulsion unit according to claim 10, wherein the cycloidal propulsion unit (2) comprises an annular rotor (22) rotatable about a main rotation axis (21) and a plurality of blades (20) mounted on the rotor (22) and extending in a direction substantially parallel to said main rotation axis (21), each blade (20) being mounted rotatable about its own rotation axis and oscillating drive means of each blade (20) around its own axis being included.

12. Aeronautical propulsion unit according to claim 11, wherein the rotor (22) is driven in rotation by an electric motor.

13. Aeronautical propulsion unit according to claim 11 or 12, wherein the oscillating drive means of each blade (20) about its own axis comprise electric servomotors.

14. Aeronautical propulsion unit according to one or more of the preceding claims, wherein the intubated propeller (10) is driven by an electric motor.

15. Aeronautical propulsion unit according to one or more of the preceding claims, wherein at least the end of said conduit (11) near the cycloidal propulsion unit (2) is provided with closing means.
